Europäisches Patentamt

European Patent Office

Office européen des brevets

(19)

(11) Veröffentlichungsnummer : **0 145 698**
**B1**

(12) EUROPÄISCHE PATENTSCHRIFT

(45) Veröffentlichungstag der Patentschrift :
07.09.88

(51) Int. Cl.⁴ : **G 01 D   5/36**

(21) Anmeldenummer : 84890179.9

(22) Anmeldetag : 02.10.84

(54) Verfahren zum Messen von Längen und Winkeln auf optoelektronischem Wege und Messeinrichtung zur Durchführung des Verfahrens.

(30) Priorität : 03.10.83 AT 3489/83

(43) Veröffentlichungstag der Anmeldung :
19.06.85 Patentblatt 85/25

(45) Bekanntmachung des Hinweises auf die Patenterteilung : 07.09.88 Patentblatt 88/36

(84) Benannte Vertragsstaaten :
AT BE CH DE FR GB IT LI LU NL SE

(56) Entgegenhaltungen :
DE-A- 2 940 847
DE-A- 2 942 080
US-A- 4 225 931
US-A- 4 269 506

(73) Patentinhaber : RSF-Elektronik Gesellschaft m.b.H.
A-5121 Tarsdorf (AT)

(72) Erfinder : Rieder, Heinz
Riedersbach 90
A-5120 St. Pantaleon (AT)
Erfinder : Schwaiger, Max

A-5121 Ostermiething 298 (AT)
Erfinder : Swatek, Harald, Dipl. Ing.
Bergstrasse 26
A-7535 St. Michael (AT)

(74) Vertreter : Hübscher, Gerhard, Dipl.-Ing. et al
Patentanwälte Dipl.-Ing. Gerhard Hübscher Dipl.-Ing.
Helmut Hübscher Dipl.-Ing. Heiner Hübscher Spittelwiese 7
A-4020 Linz (AT)

## Beschreibung

Die Erfindung betrifft ein Verfahren zum Messen von Längen und Winkeln auf optoelektronischem Wege nach dem einleitenden Teil des Patentanspruches 1.

Die Erfindung betrifft auch eine Meßeinrichtung zur Durchführung des Verfahrens gemäß dem einleitenden Teil des Patentanspruches 4.

Bei früher bekannten Verfahren und Meßeinrichtungen wurde mit gleichbleibender Lichtstärke gearbeitet und es wurden an den optoelektronischen Empfängern phasenverschobene, in ihrer Grundform sinusförmige Analogsignale, deren Signallänge der Inkrementalteilung entspricht, erzeugt. Dabei wurde, allenfalls durch Zusammenschaltung der Ausgänge mehrerer optoelektronischer Empfänger meist die Erzeugung von zwei um 90° versetzten Signalen (Sinus- und Cosinussignale) angestrebt, die der weiteren Auswertung zugeführt werden. Triggert man die Nulldurchgänge der beiden um 90° phasenverschobenen Analogsignale aus, so erhält man pro Teilungseinheit vier Zählsignale. Durch Vervielfacherschaltungen kann man aus den beiden phasenverschobenen Signalen auch mehrere Analogsignale gewinnen und deren Nulldurchgänge triggern, wobei man pro Maßstabeinheit bis zu zwanzig Zählsignale erzeugt hat. Hier ergibt sich ein großer Schaltungsaufwand. Durch Störungen und einen schwankenden Gleichspannungsanteil der Signale sind Verzerrungen bzw. Änderungen der Signalform möglich, die zu einer objektiv falschen elektronischen Unterteilung der Maßstabinkremente führen.

Zur Erhöhung des Unterteilungsfaktors auf theoretisch beliebig hohe Werte, in der Praxis in der Größenordnung von hundert bis tausend, werden Verfahren und Meßeinrichtungen der eingangs genannten Art vorgesehen.

Ein solches Verfahren und eine entsprechende Meßeinrichtung sind aus der DE-A1-2 940 847 bekannt. Bei dem bekannten Verfahren werden aus einem binären Ausgangssignal des Taktgebers durch Teilerstufen zwei die gleiche Trägerfrequenz aufweisende Signale erzeugt, die in zwei um 90° phasenverschobene Betriebs-Wechselspannungen für die in zwei Gruppen vorzusehenden Beleuchtungseinrichtungen umgeformt werden. Die Signale weisen die Trägerfrequenz auf und werden bei der Verstellung der Abtasteinheit durch den Maßstab und die Ablesegitter zusätzlich in ihrer Amplitude moduliert. Durch Zusammenführen der phasenverschobenen Signale wird ein Summensignal gebildet, das vom hochfrequenten Anteil der Trägerfrequenz und dem niederfrequenten Anteil durch die Modulation an Ablesegittern und Maßstab bestimmt ist. Dieses analoge Signal wird über einen A/D-Wandler in digitale Form umgewandelt, wobei man durch Vergleich der Summenfunktion mit der von der einen Teilerstufe abgeleiteten Trägerfunktion in einer digitalen Phasenauswerteeinheit das die Phasenverschiebung repräsentierende Steuersignal erhält. Bei diesem bekannten Verfahren ergeben sich Störungseinflüsse, durch den schwankenden Gleichspannungsanteil der der Auswertung zugeführten modulierten Signale und ein verhältnismäßig hoher Aufwand, da für die Modulation der Beleuchtung zwei verschiedene Teilerstufen mit nachgeordneten Frequenzfiltern benötigt werden. Überdies ist in der DE-AI-2 940 847 keine Aussage darüber enthalten, wie man bei Messungen mit Änderungen der Verstellrichtung der Abtasteinheit während des Meßvorganges vorzugehen hat.

Aus der DE-A1-2 942 080 ist ein ähnliches Verfahren bekannt, bei dem aber die Beleuchtung mit Gleichlicht erfolgt und erst in der Auswerteeinheit in Multiplikationsstufen eine Verknüpfung der um 90° phasenverschobenen sinusförmigen Meßsignale mit der von einem Taktgeber über Teilerschaltungen abgeleiteten Wechselspannung erfolgt. Es werden zwei um 90° phasenverschobene sinusförmige Wechselsignale in der Trägerfrequenz erzeugt und in Multiplikationsstufen mit den analogen Sinus- bzw. Cosinusmeßsignalen moduliert, so daß durch Zusammenführung der Signale wieder ein gegenüber dem Grundtakt an einem zweiten Teiler phasenverschobenes Signal erhalten wird, das einem phasenempfindlichen Demodulator zugeführt wird, dessen Referenzspannung vom Teiler kommt. Die Ausgangsspannung des phasenempfindlichen Demodulators wird einem Tiefpaßfilter und anschließend einer Impulserzeugerstufe zugeführt, die ein Zählrichtungssignal für einen nachgeschalteten Zähler erzeugt und damit bewirkt, daß der Momentanstellung der Abtasteinheit, also dem jeweils abgetasteten Teilungsbruchteil entsprechende Impulsgruppen verstellrichtungsabhängig in den Zähler eingezählt werden. Verstellrichtungsabhängig bedeutet, daß diese Impulse bei der einen Verstellrichtung zum Zählerinhalt addiert und bei der anderen Verstellrichtung vom Zählerinhalt subtrahiert werden. Dem Zähler kann eine Anzeigeeinheit nachgeordnet sein. Hier ergibt sich ein gegenüber der Schaltung nach der DE-A1-2 940 847 erhöhter Schaltungsaufwand, der Phasendetektor ist direkt galvanisch mit den Ausgangssignalen gekoppelt, so daß bei verschieden hohen Gleichspannungsanteilen Fehler auftreten und es müssen aus den Taktsignalen zwei um 90° phasenverschobene Wechselspannungen erzeugt werden, wodurch die Signalerzeugung weiter kompliziert wird. Auch hier wird mit einem einzigen Betriebszähler gearbeitet, der im Dauerbetrieb eine der Taktfrequenz entsprechende Zählfrequenz zulassen muß. Dabei ist die Taktfrequenz hoch zu wählen, damit auch bei hoher Verstellgeschwindigkeit der Abtasteinheit gegenüber dem Maßstab Fehler vermieden werden. Durch verschluckte Zählimpulse oder eingestreute Störungen bedingte Zählfehler werden nicht korrigiert und summieren sich im Verlauf einer Messung.

Aufgabe der Erfindung ist die Schaffung eines Verfahrens und einer zu seiner Durchführung geeigneten Meßeinrichtung das bzw. die unter Verringerung des schaltungstechnischen Aufwandes genaue Messungen bei bezogen auf die Maßstabteilung hohem Auflösungsvermögen gewährleistet, wobei die Meßeinrichtung einen einfachen Aufbau aufweisen soll und Meßfehler durch Störungseinstreuung, Alterungs- und Verschmutzungsempfindlichkeit bzw. verschluckte Zählimpulse weitgehend ausgeschaltet werden.

Das erfindungsgemäße Verfahren ist durch die im kennzeichnenden Teil des Anspruches 1 angegebenen Verfahrensschritte gekennzeichnet.

Es wird wegen des gleichphasigen Betriebes der Beleuchtung eine wesentliche Vereinfachung gegenüber den bisher üblichen Verfahren erzielt. Dabei wird die Betriebswechselspannung für die Beleuchtungseinrichtungen meist einer Gleichspannung überlagert, um nur Helligkeitsschwankungen der Beleuchtungseinrichtungen, nicht aber einen vollen Hell-Dunkelbetrieb zu erzielen. Der gleichphasige Betrieb der Beleuchtungseinrichtungen wird in einfacher Weise dadurch ermöglicht, daß das eine Signal vor dem Zusammenführen mit dem anderen Signal um 90° phasenverschoben wird.

Für den weiteren Schritt gemäß Anspruch 2 können die Zähl- bzw. Richtungserkennungssignale, wie beim Gleichlichtbetrieb üblich, beim Nulldurchgang der sinusförmigen Modulationskurven auscodiert werden. Durch den Schritt nach Anspruch 3 werden innerhalb einer Meßstrecke volle Maßstabinkremente von dem einen und Inkrementbruchteile vom anderen Zähler erfaßt, wodurch Betriebssicherheit und Anzeigegenauigkeit erhöht werden. Über die Erfassung der vollen Inkremente kann auch eine Synchronisierung des die Impulsgruppen erfassenden Zählers vorgenommen werden.

Die zur Durchführung des erfindungsgemäßen Verfahrens vorgesehene Meßeinrichtung ist in ihren wesentlichen Teilen im Anspruch 4 angegeben.

Durch die Weiterbildung nach Anspruch 5 wird der Phasendetektor galvanisch von den optoelektronischen Empfängern getrennt. Diesem Teil der Schaltung, der für die exakte Ermittlung der den Maßstabbruchteilen zuständig ist, erhält nur mehr eine modulierte Wechselspannung zugeführt, so daß Änderungen des Gleichspannungspegels, gleichgültig, ob sie durch Helligkeitsschwankungen, Alterungen oder andere Gründe bedingt sind, keinen nachteiligen Einfluß auf die Detektion der Phasenverschiebung und damit auf das Meßergebnis haben können.

Weitere Einzelheiten und vorteilhafte Ausgestaltungen des Erfindungsgegenstandes entnimmt man den weiteren abhängigen Ansprüchen und der Zeichnungsbeschreibung.

In der Zeichnung ist der Erfindungsgegenstand beispielsweise dargestellt. Es zeigt

Fig. 1 ein Blockschaltschema einer Meßeinrichtung

Fig. 2 das Schaltschema einer einfacheren Meßeinrichtung und

Fig. 3 ein Schema des Meßsystems.

Es werden Längenmeßeinrichtungen beschrieben ; in prinzipiell gleicher Weise können auch Winkel auf entsprechend kreisförmigen Maßstäben gemessen werden.

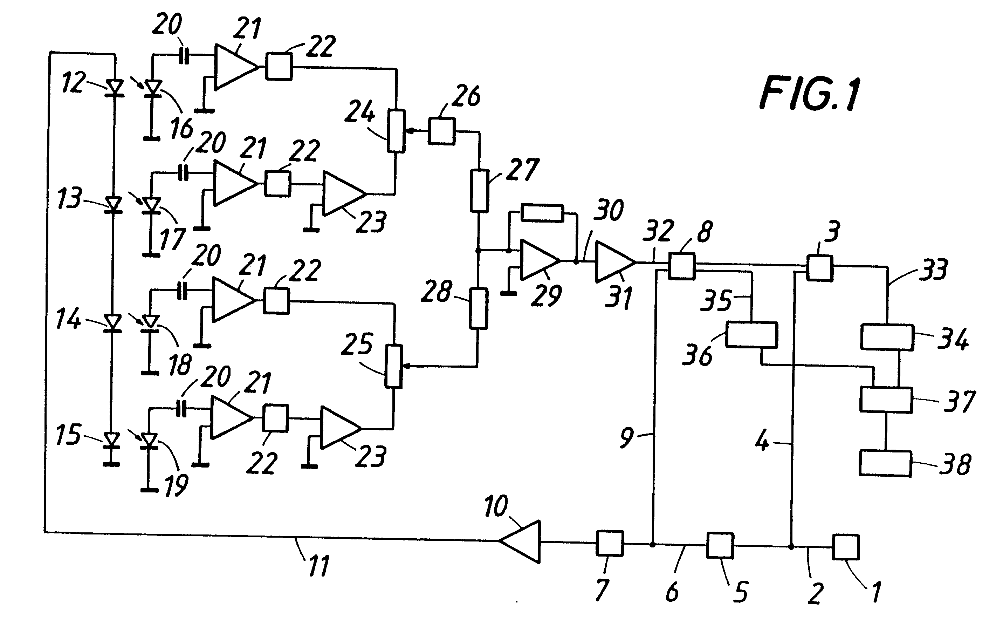

Nach Fig. 1 ist ein Taktgeber 1 bzw. ein Oszillator vorhanden, der auf seine Ausgangsleitung 2 Rechtecksignale, also digital auswertbare Signale abgibt. An der Leitung 2 liegen eine zu einem noch zu beschreibenden Tor 3 führende Steuerleitung 4 und ein programmierbarer Teiler 5. Wie noch zu beschreiben sein wird, bestimmt das Teilungsverhältnis des Teilers 5 in weiterer Folge das mit der erfindungsgemäßen Schaltung erzielbare Teilungsverhältnis des vollständigen, bei der Abtastung eines Inkrementes erhaltenen Signalzuges. Die an einer Leitung 6 liegende Ausgangsfrequenz des am programmierbaren Teiler 5 eingestellten Signales muß bzw. soll nach dem Abtast-Theorem wenigstens das zweifache, Vorzugsweise aber ein mehrfaches der sich aus Maßstab- bzw. Gitterteilung und Verschiebegeschwindigkeit bei der Abtastung ergebenden Grundfrequenz betragen. Für eine Inkrementalteilung an Maßstab und Gitter von 0,2 mm und eine Verschiebegeschwindigkeit von 1 m/sec. wird beim Ausführungsbeispiel eine Ausgangsfrequenz des Taktgebers von 50 kHz und ein Teilungsverhältnis des programmierbaren Teilers 5 von 1 : 2000 angenommen, so daß die Ausgangsfrequenz des Teilers das zehnfache der theoretisch bei der höchsten Verschiebegeschwindigkeit erzeugbaren Abtastfrequenz beträgt. Die Ausgangssignale des programmierbaren Teilers 5 liegen am Eingang eines schmalbandigen Filters 7 und werden überdies in ihrer digitalen Form auf eine zu einem Phasendetektor 8 führende Leitung 9 gelegt.

Über das schmalbandige Filter 7 und einen nachgeschalteten Verstärker 10 werden die digitalen Ausgangssignale des programmierbaren Teilers 5 in eine sinusförmige bzw. sinusähnliche Spannung mit der Teiler- und Ausgangsfrequenz entsprechender Frequenz umgewandelt. Diese Spannung liegt auf einer Leitung 11 und wird als Versorgungsspannung für eine oder mehrere (beim Ausführungsbeispiel vier) Leuchtdioden 12 bis 15 verwendet, deren Helligkeit somit im Rhythmus der über die Leitung 11 zugeführten Sinusspannung schwankt.

Die Leuchtdioden 12 bis 15 dienen der Beleuchtung von optoelektronischen Empfängern 16 bis 19, wobei aber in den Lichtleitungsweg zwischen jede Leuchtdiode 12 usw. und den zugehörigen optoelektronischen Empfänger — als licht empfindliche Diode dargestellt — ein Inkrementalmaßstab und ein Abtastgitter eingeschaltet sind. Die den vier Optoempfängern 16 bis 19 zugeordneten Gitter sind gegeneinander bezüglich des Maßstabes versetzt. Die Gitterteilung kann, muß aber nicht, der Inkrementalteilung des Maßstabes entsprechen, sollte aber auf jeden Fall ein ganzzahliges Vielfaches des Maßstabteilung sein. Der Relativversatz der Abtastgitter ist so gewählt, daß die Hell- und Dunkelfelder der Abtastgitter in verschiedenen Verschiebestellungen gegenüber dem Maßstab dessen Hell-bzw. Dunkelfelder abdecken. Würde an den Leuchtdioden 12 bis 15 in bisher üblicher Weise mit Gleichstrom, also gleichbleibendem Licht, gearbeitet, dann erhielte man an den optoelektronischen Empfängern 16 bis 19 gegeneinander phasenverschobene, in ihrer Grundform sinusförmige Signale, deren Wellenlänge der Maßstabteilung entspricht. Dabei wären die Signale am Empfänger 17 gegenüber dem Empfänger 16 um 180°, am Empfänger 18 gegenüber dem Empfänger 16 um 90° und am Empfänger 19 gegenüber dem Empfänger 16 um 270° phasenverschoben.

Da die Leuchtdioden 12 bis 15 mit der hochfrequenten Wechselspannung über die Leitung 11 angespeist werden, tritt am Ausgang der optoelektronischen Empfänger 16 bis 19 jeweils ein die entsprechende Grundfrequenz als Trägerfrequenz aufweisendes Signal auf, bei dem die Trägerspannung durch die Abtastung eine Amplitudenmodulation erhält. Das jeweilige Signal wird über einen Kondensator 20 einem Verstärker 21, der dem jeweiligen optoelektronischen Empfänger 16 bis 19 zugeordnet ist, zugeführt. Wegen der kapazitiven Kopplung über die Kondensatoren 20 wird zunächst einmal prinzipiell eine galvanische Trennung der Auswertungseinheit von der Signalerzeugungseinheit erreicht, wodurch die Übertragung der Gleichspannungsanteile der Signale und damit Signalverzerrungen durch Driften der Gleichspannung vermieden werden. Überdies werden sonst durch die galvanische Kopplung mögliche Störungen bzw. Störungseinblendungen vermieden, so daß der Rauschpegel der ausgewerteten Signale weitgehend verringert wird.

Beim Ausführungsbeispiel sind den Verstärkern 21 Bandfilter 22 nachgeordnet, die zur Ausblendung des im jeweiligen Signal enthaltenden niederfrequenten Signales (Abtast-Sinussignales),von eingestreuten Störungen und des Rauschens dienen. Den mit den Empfängern 17 bis 19 gekoppelten, also die gegenüber der Grund-Modulation, die am Empfänger 16 auftritt, um 180° bzw. 270° phasenverschobene Modulation der Trägerfrequenz führenden Filtern 22 sind Inverter 23 nachgeordnet. Jeweils die von den optoelektronischen Empfängern 16 und 18 stammenden Signale werden paarweise mit dem gegenüber ihrem Signal um 180° phasenverschoben modulierten, aber über den Inverter 23 geführten Signal in einem Summenbildner 24 bzw. 25 zusammengeführt. An den Summenbildner 24 ist ein Phasenschieber 26 angeschaltet, der dem anstehenden Trägersignal eine Phasenverschiebung um 90° erteilt. Das phasenverschobene Signal vom Summenbildner 24 und das Ausgangssignal des Summenbildners 25 werden einem weiteren, aus zwei Widerständen 27, 28 und einem Operationsverstärker 29 bestehenden Summenbildner zugeführt. Durch die Summe der bisher geschilderten Maßnahmen wird erreicht, daß am Ausgang 30 der Summenbildnerschaltung 27 bis 29 ein Signal ansteht, das ggf. die gleiche Frequenz wie das auf der Leitung 11 liegende Signal besitzt, gegenüber diesem Signal aber phasenverschoben ist. Die Phasenverschiebung des an der Leitung 30 liegenden Signales entspricht genau der Relativverstellung der Gitterinkremente der Abtasteinheiten gegenüber der Maßstabteilung, also jenem Teilungsbruchteil, um den die Abtasteinheit gegenüber dem Maßstab aus einer vollen Deckung der Inkremente des der Einheit 16 zugeordneten Gitters mit den Inkrementen des Maßstabes verstellt ist. Das an der Leitung 30 anstehende Signal wird über einen Komperator 31 in ein Rechtecksignal umgewandelt und über eine Leitung 32 einem Phasendetektor 8 zugeführt, an dem auch die Leitung 9 liegt. Über den Phasendetektor 8 wird ein Tor 3 in bekannter Weise so gesteuert, daß es beim Nulldurchgang des einen Signales öffnet und beim Nulldurchgang des anderen Signales schließt, die Öffnungszeit des Tores also von der Phasenverschiebung des auf der Leitung 30 liegenden Signales gegenüber dem auf der Leitung 11 liegenden Signal abhängig ist. Das Tor 3 wird für diese Zeit für die auf der Leitung 4 liegenden Ausgangssignale des Oszillators 1 durchlässig.

Diese durch die Öffnungszeiten des Tores 3 bestimmten Signalgruppen werden über eine Leitung 33 einem Inkrementzähler 34 zugeführt, der jeweils den Inhalt einer Signalgruppe erfaßt. Der Zählerstand am Zähler 34 ist also dem erwähnten Maßstabbruchteil unmittelbar proportional. Beim Ausführungsbeispiel würde ein Zählerstand von 200 einem vollen Maßstabinkrement entsprechen.

Beim Ausführungsbeispiel ist zur Erfassung der abgetasteten, vollen Maßstabeinheiten und zur Richtungsbestimmung, also zur Bestimmung ob auf- oder abgezählt werden muß, ein speziell geschalteter Phasendetektor 8 vorgesehen, der jeweils beim Maximum- bzw. Minimumdurchgang des aus der Summe der Modulationssignale abgeleiteten Signales ein Steuersignal an eine Leitung 35 legt, an der ein weiterer Zähler 36 liegt, dessen Zählerstand somit der Anzahl der zwischen dem Abtastpunkt und einem vorgewählten oder vorbestimmten Nullpunkt liegenden, abgetasteten vollen Maßstabinkremente entspricht. Es wurde nur eine Leitung 35 dargestellt. In der Praxis wird im Phasendetektor 8 auch die Verstellrichtung ermittelt und es werden dementsprechend über die Ausgangssignale ein « up » und ein « down »-Eingang des Zählers 36 beaufschlagt. Die jeweiligen Zählerstände der Zähler 34, 36 werden einem Mikroprozessor 37 zugeführt, der eine Anzeige 38 steuert oder mit einer Steuereinrichtung bzw. Fernanzeige verbunden ist.

Der Mikroprozessor 37 kann wegfallen, wenn der Zähler 36 durch entsprechende Abstimmung der Frequenzen und der Maßstab- und Gitterteilung in Einheiten zählt, die Dekaden des metrischen Maßstabes (bzw. entsprechenden üblichen Winkelteilungen bei Bogenmessungen oder sonstigen anzuzeigenden üblichen Maßstabbruchteilen) entsprechen und das Teilungsverhältnis des programmierbaren Teilers entsprechend gewählt wird. Bei metrischer Anzeige könnte man ein Teilungsverhältnis von 1 : 100 vorsehen und als Beispiel mit dem Zähler 36 in der Einerstelle 0,1 mm entsprechenden Einheiten zahlen, so daß der Zählerstand des Zählers 34 den Hundertstel bzw. Tausendstel-Millimetern entsprechen würde und direkt angezeigt werden könnte.

Zu erwähnen ist, daß man nicht unbedingt zu jedem Ausgangssignal des Teilers 5 eine Zählung über das Tor 3 vornehmen muß, sondern daß es für die Praxis genügt, wenn eine entsprechende Öffnung bzw. Schließung des Tores nur bei jedem n-ten Ausgangssignal des Teilers erfolgt, wobei n eine ganze Zahl ist. Der tatsächliche Inhalt des Zählers 34 interessiert in der Praxis meist nur bei langsamer Verstellgeschwindigkeit der Meßeinrichtung bzw. am Ende einer Messung.

Beim dargestellten Ausführungsbeispiel werden die den Stand des Zählers bestimmenden Signale am Phasendetektor auscodiert. Es können aber auch die Modulationssignale, also die Sinussignale mit der der Maßstabteilung entsprechenden Wellenlänge durch parallel zu den Filtern 22 geschaltete Filter, in denen der HF-Anteil der Signale ausgefiltert wird, oder durch andere Demodulationseinrichtungen zu erzeugen und in herkömmlicher Weise einer Richtungsdiskriminatorschaltung und einer Zählschaltung mit Flankenauswertung am Nulldurchgang zuzuführen, um auf diese Weise einen dem ganzzahligen Inkrementabstand vom Nullpunkt des Maßstabes bzw. dem gewählten Nullpunkt entsprechenden Zählerstand im Zähler 36 oder einer entsprechenden Auswerte- oder Anzeigeeinrichtung zu erzeugen.

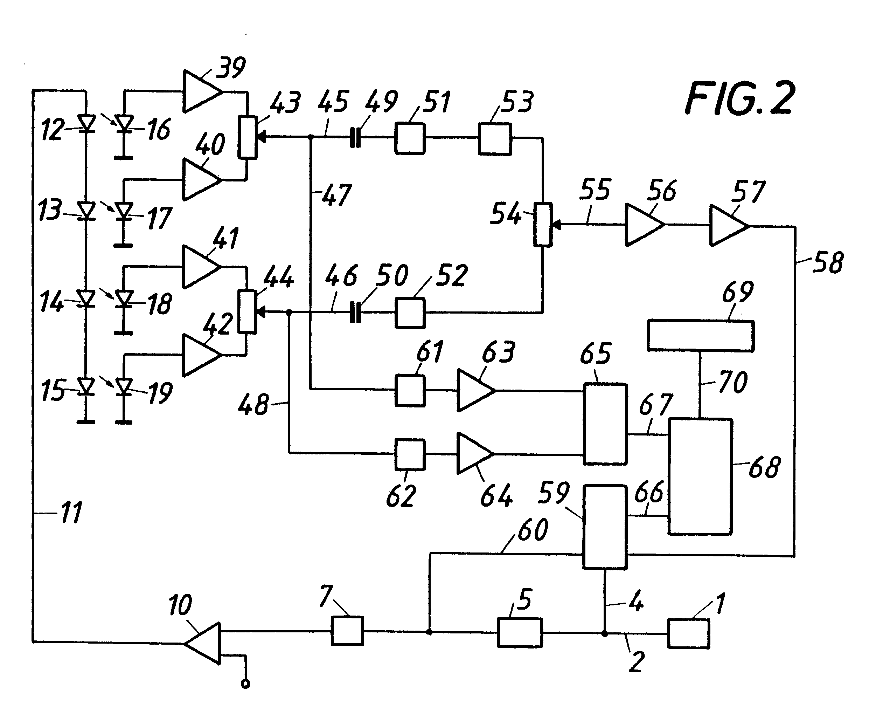

Eine mögliche Ausführungsform dieser letztgeschilderten Variante ist in Fig. 2 veranschaulicht. In dieser Fig. wurden gleiche bzw. ähnliche Schaltelemente mit den gleichen Bezugszeichen wie in Fig. 1 bezeichnet.

Die Erzeugung der Versorgungsspannung für die Leuchtdioden 12 bis 15 erfolgt ähnlich wie bei der Ausführungsform nach Fig. 1. Statt dem dort vorgesehenen reinen Verstärker 10 ist ein Gleichspannungs-Komperator vorgesehen, bei dem der Gleichspannungsanteil einstellbar ist.

Wesentliche unterschiede bzw. Vereinfachungen gegenüber der Schaltung nach Fig. 1 bestehen darin, daß die Ausgangssignale der Empfänger 16 bis 19 zunächst auf Verstärker 39, 40, 41, 42 gelegt und dann unmittelbar die jeweils um 180° versetzten Signale über Summenbildner 43, 40 zusammengeführt werden. Die Ausgänge der Summenbildner 43, 44 liegen auf Leitungen 45, 46,von denen Leitungen 47, 48 abzweigen. Die auf den Leitungen 45, 46 liegenden Summensignale werden nun in zwei verschiedenen Verarbeitungszweigen weiter behandelt. Dabei dient der eine über Kondensatoren 49, 50 angekoppelte Zweig wieder der Auscodierung der Phasenverschiebung im Trägersignal, wogegen der über die Leitungen 47, 48 angeschlossene Zweig der Erzeugung von Modulationssignalen, also von Signalen mit der Maßstabteilung entsprechender Wellenlänge und in weiterer Folge von Zählsignalen und Richtungserkennungssignalen aus diesen Signalen dient.

In dem über die Kondensatoren 49, 50 galvanisch getrennt angekoppelten und daher von Gleichspannungsanteilen befreiten Zweig werden die auf den Leitungen 45, 46 liegenden Signale über Bandfilter 51, 52 geleitet, wobei dem Bandfilter 51 ein Phasendrehglied 53 nachgeordnet ist, das das anstehende Signal um 90° dreht. Das aus dem Phasendrehglied austretende Signal und das aus dem Filter 52 kommende Signal werden einem Summenbildner 54 zugeführt, an dessen Abgriff 55 ein Verstärker 56 liegt. Ein nachgeordneter Komperator 57 erzeugt ein von der Phasenverschiebung im Trägersignal abhängiges Ausgangssignal, das auf eine Leitung 58 gelegt wird.

Die Leitung 56 liegt am « Stopp »-Eingang eines Zählers 59 dessen Starteingang vom programmierten Teiler 5 über eine Leitung 60 beaufschlagt wird. In ihrer prinzipiellen Funktion entsprechen die Leitungen 58, 60 den Leitungen 9, 32 nach Fig. 1 doch ist eben kein Tor, sondern ein Zähler mit Start- und Stoppeingang zu schalten. Der Zähler liegt über eine Leitung 4 an den Ausgangssignalen des Taktgebers 1 und zählt also zwischen Start und Stopp die Taktsignale, deren Anzahl unmittelbar der Phasenverschiebung im Trägersignal proportional ist. Wie Fig. 2 zeigt, ergibt sich für die Ermittlung dieser Zählsignale ein gegenüber Fig. 1 wesentlich verringerter Schaltungsaufwand, wobei ein entscheidender Vorteil darin besteht, daß an und für sich herkömmliche Schaltungen bis zu den Summenbildnern 43, 44 verwendet werden können, d. h. die Beleuchtungseinrichtungen 12 bis 15 die optoelektronischen Empfänger 16 bis 19, die Verstärker 39 bis 42 und die Summenbildner 43, 44 können in gleicher Weise auch bei üblichen mit Gleichlicht betriebenen Längen- bzw. Winkelmeßeinrichtungen verwendet werden. Lediglich die Versorgung und die Auswertung weicht von herkömmlichen Gleichlichtbetrieb ab.

An die Leitungen 47, 48 sind Tiefpaßfilter 61, 62, Latch-and-Holdeinrichtungen oder ähnliche Schaltungselemente angeschlossen, die der Amplitudenmodulation der Trägerfrequenz entsprechende Signale, beim Ausführungsbeispiel zwei um 90° phasenverschobene Sinussignale, deren Wellenlänge der Maßstabteilung entspricht, von den an den Summenbildnern 43, 44 stehenden Signalen ableiten. Diese Signale werden über Komperatoren, Schmidt-Trigger od. dgl. beispielsweise beim Nulldurchgang in Rechtecksignale umgewandelt und als Zähl- und Richtungserkennungssignale einem Inkrementzähler 65 zugeführt, der also zählt, wie viele volle Maßstabinkremente im Verlauf einer Messung überstrichen werden. Die Summe der Zählerstande der beiden Zähler 49, 65 ergibt das Meßergebnis. Die Zähler 49, 65 sind zu diesem Zweck über Leitungen 66, 67 mit einem Mikroprozessor 68 verbunden, der vom Zähler 65 auch mit einem Richtungserkennungssignal beaufschlagt wird. Im einfachsten Fall bildet der Mikroprozessor stellenwertrichtig die Summe der Zählerstände, die dann als Me-

Bergbnis auf einer Anzeige 69, die bei einer Leitung 70 anschließt, angezeigt werden. Selbstverständlich sind auch andere Auswertungsarten und Verknüpfungen der Zählsignale bzw. Zählerstände möglich. Es ist denkbar, nicht unmittelbar einen Zähler 59 zu verwenden, sondern die über Start und Stoppeingang aus der Leitung 4 eingezählten Signale zur Adressenbestimmung in einer gespeicherten Interpolationstabelle zu verwenden. Ferner ist nicht einfach eine Anzeige 69 erforderlich, sondern der Mikroprozessor 68 kann auch Bestandteil einer Bahnsteuereinrichtung oder eines Industrieroboters sein.

In der Praxis kann man mit der erfindungsgemäßen Schaltung auch bei gröberer Maßstabteilung durch ein entsprechend hohes Teilungsverhältnis des programmierbaren Teilers oder durch Interpolation eine hohe Auflösung erzielen. Vorzugsweise wird man die gleichen prinzipiellen Schaltungen für Maßstäbe mit verschiedener Teilung vorsehen und die Anpassung über den programmierbaren Teiler vornehmen, der dann gegebenenfalls gleich mit Fixanschlüssen für Längenmeßeinrichtungen mit verschiedenen, bestimmten Maßstab- und Gitterteilungen versehen ist.

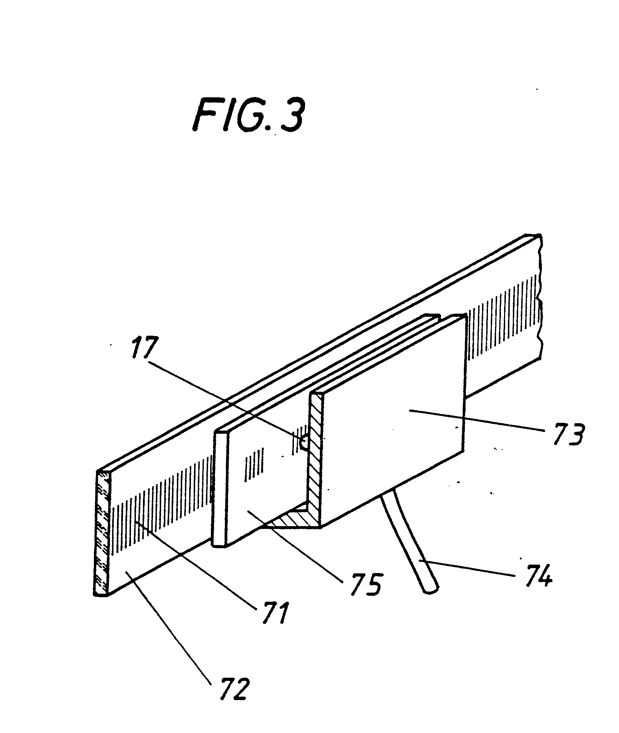

Zur Vervollständigung der Erläuterung einer möglichen Ausführungsform wird auf Fig.3 verwiesen. Dort ist ein transparenter, mit einer Inkrementalteilung 71 versehener Maßstab 72 vorgesehen, über den ein Gleiter 73 verstellbar ist, in dem an der einen Seite des Maßstabes die Leuchtdioden 12 bis 15 und an der anderen Seite des Magstabes hinter versetzten Abtastgittern 75 die optoelektronischen Empfänger 16, 17 angebracht sind. Der Gleiter 73 ist über Anschlußleitungen 74 mit der Versorgungs- bzw. Auswerteeinheit verbunden.

**Patentansprüche**

1. Verfahren zum Messen von Längen und Winkeln auf optoelektronischem Wege, bei dem eine versetzte Ablesegitter aufweisende Abtasteinheit (73) relativ gegenüber einem Inkrementalmaßstab (71, 72) verstellt, die optoelektronischen Empfänger (16 bis 19) über die Gitter und den Maßstab (72) beleuchtet, dabei einer der Maßstabteilung (71) zugeordneten Sinusfunktion folgende, für die einzelnen Empfänger (16 bis 19) phasenverschobene Schwankungen in der Beleuchtungsstärke erzeugt und diese bei der Gewinnung von entsprechend modulierten, aus dem Ausgangssignal eines Taktgebers (1) abgeleiteten Träger-Wechselspannungen verwendet werden, aus denen durch Zusammenführung ein in seiner Phase gegenüber dem vom Taktgeber abgeleiteten Grundsignal proportional dem eben abgetasteten Teilungsbruchteil verschobenes Signal gewonnen wird, aus dessen Phasenverschiebung ein Steuersignal zum verstellrichtungsabhängigen Einzählen einer proportionalen Impulsgruppe im Takt des Taktgebers (1) in einen Zähler (34, 59) gewonnen wird, dadurch gekennzeichnet, daß die Beleuchtung (12 bis 15) der optoelektronischen Empfänger (16 bis 19) gleichphasig in der Trägerfrequenz moduliert wird, so daß an den Ausgängen der Empfänger (16 bis 19) die der weiteren Verarbeitung zugeführten amplitudenmodulierten Signale anstehen, wobei eines der modulierten Ausgangssignale vor dem Zusammenführen mit dem anderen Signal um 90° phasenverschoben wird und aus einem binären Ausgangssignal des Taktgebers ein binäres, die Trägerfrequenz aufweisendes Signal erzeugt wird, aus dem eine Betriebs-Wechselspannung für die Beleuchtungseinrichtung (12 bis 15) abgeleitet und nach dem die dem momentan abgetasteten Teilungsbruchteil des Maßstabes (72) entsprechende Phasenverschiebung des phasenverschobenen Signales bestimmt wird, das in ein binäres Steuersignal rückverwandelt wird.

2. Verfahren nach Anspruch 1, dadurch gekennzeichnet, daß zusätzlich aus den modulierten Signalen den vollen Maßstabinkrementen zugeordnete Zähl- bzw. Richtungserkennungssignale erzeugt werden.

3. Verfahren nach Anspruch 2, dadurch gekennzeichnet, daß den abgetasteten vollen Maßstabinkrementen entsprechende Zählsignale in einem eigenen Zähler (36, 65) gezählt und die Inhalte dieses Zählers (36, 65) und des die Impulse der Impulsgruppen erfassenden Zählers (34, 59) in einem eine Anzeige- oder Auswertungseinheit (38, 69) steuernden Rechner (37, 68) zum Meßergebnis verknüpft werden.

4. Meßeinrichtung zur Durchführung des Verfahrens nach einem der Ansprüche 1 bis 3 mit einem Inkrementalmaßstab (71, 72) und einer relativ zu diesem verstellbaren Abtasteinheit (73) mit Beleuchtungseinrichtungen (12 bis 15), die optoelektronische Empfänger (16 bis 19) über den Maßstab (71) und gegeneinander um Teilungsbruchteile versetzte Abtastgitter beleuchten, Modulationsstufen zur Amplitudenmodulation einer von einem Taktgeber (1) mit nachgeordneter Teilerstufe (5) erzeugten Träger-Wechselspannung entsprechend den einer Sinusfunktion folgenden, gegeneinander phasenverschobenen Änderungen der Beleuchtungsstärke der optoelektronischen Empfänger (16 bis 19) bei der Relativverstellung von Inkrementalmaßstab (72) und Abtasteinheit (73), den Empfängern (16 bis 19) in zwei Signalführungszweigen nachgeordneten Umformer- oder Summationsstufen und einer Endstufe (27, 28, 54), in welcher die zwei in den Signalführungszweigen geführten modulierten Signale, bei denen das eine Trägersignal eine Phasendrehung von 90° aufweist, zusammengeführt werden, so daß ein im Trägersignal in seiner Phase gegenüber der Ausgangs-Träger-Wechselspannung proportional dem eben abgetasteten Teilungsbruchteil verschobenes Signal erhalten wird, einem Phasendetektor (3, 57) zur Erzeugung eines Steuersignales und einem Zähler (34, 59) in den in ihrer Größe vom Steuersignale bestimmte, dem Teilungsbruchteil entsprechende Impulsgruppen im Takt des Taktgebers verstellrichtungsabhängig in den Zähler (34, 59) einzählbar sind, dadurch gekennzeichnet, daß die mit Maßstab (71, 72), Abtastgittern und optoelektronischen Empfängern (16 bis 19) selbst die Modulationsstufen bildenden Beleuchtungseinrichtungen (12 bis 15) an einer einzigen, gemeinsamen Träger-Wechselspannung liegen, so daß die Beleuchtungsstärke gleichphasig schwankt, daß in dem einen Signalführungszweig (21, 22, 23, 24, 27 bzw. 45) ein die Phasendrehung des Trägersignales um 90° erzeugendes Phasendrehglied (26, 53) angeordnet ist.

5. Meßeinrichtung nach Anspruch 4, dadurch gekennzeichnet, daß der den Phasendetektor enthaltende Teil der Schaltung kapazitiv (20, 49, 50) an die die Ausgangssignale führenden Leitungen (45, 46) angekoppelt ist.

6. Meßeinrichtung nach den Ansprüchen 4 und 5, dadurch gekennzeichnet, daß der Zähler (34) mit dem Taktgeber (1) über eine Torschaltung (3, 8) verbunden ist, die einerseits von einem aus der Teilerstufe erhaltenen, in einem anderen Zweig (7, 10, 11) in die Träger-Wechselspannung umgeformten Binärsignal und anderseits von dem in ein Binärsignal rückverwandelten, phasenverschobenen Trägersignal angesteuert ist, so daß die Toröffnungszeit und damit die Anzahl der zum Zähler (34) durchgelassenen Taktsignale der Phasenverschiebung proportional ist.

7. Meßeinrichtung nach Anspruch 4 oder 5, dadurch gekennzeichnet, daß der Zähler (59) mit dem Taktgeber (1) verbunden ist und einen Start- und einen Stoppeingang (60, 58) aufweist, wobei der Starteingang (60) vom Ausgang der Teilerstufe (5) und der Stoppeingang vom Ausgang des Phasendetektors (57) beaufschlagt ist.

8. Meßeinrichtung nach einem der Ansprüche 4 bis 7, dadurch gekennzeichnet, daß zur Bestimmung der Zählrichtung ein auf den Verlauf der Amplitudenmodulation empfindliches Glied (8, 65) vorgesehen ist.

9. Meßeinrichtung nach einem der Ansprüche 4 bis 8, dadurch gekennzeichnet, daß ein weiterer Zähler (36, 65) vorgesehen ist, der vom Verlauf der Amplitudenmodulation abgeleitete Zählsignale Verstellrichtungsabhängig zählt und daß den beiden Zählern (34, 36) bzw. (59, 65) ein Rechner (37, 68) zur Bestimmung des Meßergebnisses nachgeordnet ist, der mit der Anzeige- oder Auswertungseinheit (38, 69) verbunden ist.

10. Meßeinrichtung nach einem der Ansprüche 4 bis 9, dadurch gekennzeichnet, daß zur Erzeugung von dem Verlauf der Amplitudenmodulation entsprechenden Signalen an die Ausgänge der die optoelektronischen Empfänger (18 bis 19) aufweisenden Empfängerschaltung zusätzlich Hochfrequenzfilter, Tiefpaßfilter (61, 62) oder Latch-and-Holdeinrichtungen angeschaltet sind.

11. Meßeinrichtung nach einem der Ansprüche 4 bis 10, dadurch gekennzeichnet, daß eine die Zählrichtungen der beiden Zähler (34, 36) entsprechend der Verstellrichtung der Abtasteinheit (73) bestimmende, von den dem Verlauf der Amplitudenmodulation entsprechenden Signalen gesteuerte Richtungsdiskriminatorschaltung (8) vorgesehen ist.

12. Meßeinrichtung nach einem der Ansprüche 4 bis 11, dadurch gekennzeichnet, daß die Abtasteinheit vier optoelektronische Empfänger (16 bis 19) aufweist, die Abtastgittern zugeordnet sind, welche um je eine Viertelteilung des Inkrementalmaßstabes (71) versetzt sind, so daß die Amplitudenmodulationen der an ihnen anstehenden Signale um je 90° phasen verschoben sind, daß die um 180° gegeneinander phasenverschoben modulierten Signale paarweise in einem Summenbildner (24, 25, 43, 44) zu einem Summensignal zusammengefaßt, daß das eine Summensignal über das 90°-Phasendrehglied geleitet und die Summensignale zur einer Ausgangs-Summationsstufe (27, 29 bis 44) geführt sind, deren Ausgangssignal über einen Wandler (Komperator 31, 57) in ein digitales Signal verwandelt wird, dessen zeitlicher Abstand vom auslösenden digitalen Ausgangssignal der dem Taktgeber (1) nachgeordneten Teilerstufe (5) der Phasenverschiebung im Tragersignal entspricht.

13. Meßeinrichtung nach Anspruch 12, dadurch gekennzeichnet, daß die um 180° phasenverschoben modulierten Signale (aus 16 und 17 bzw. 18 und 19) in je einem Summenbildner (24, 25) unter Invertierung des einen Signales zusammengefaßt werden.

14. Meßeinrichtung nach Anspruch 12, dadurch gekennzeichnet, daß das der Phasenverschiebung entsprechende digitale Ausgangssignal des Komperators (57) am Stoppeingang eines vom Ausgang der Teilerstufe (5) gestarteten, am Taktgeber (1) angeschlossenen Zählers liegt.

**Claims**

1. A method of optoelectronically measuring lengths and angles, wherein a scanning unit (73) comprising offset reading gratings is adjusted relative to an incremental scale member (71, 72), the optoelectronic receivers (16 to 19) are illuminated through the gratings and the scale (72), variations of the intensity of illumination, which variations follow a sine function that is associated with the scale (71) and are displaced in phase for the individual receivers (16 to 19), are produced and are used in the recovery of correspondingly modulated alternating carrier voltages, which are derived from the output signal of a clock, said alternating carrier voltages being combined to generate a signal which is displaced in phase in proportion to the just scanned fractional part of a scale increment from the base signal derived from the clock, and a control signal for the counting of a proportional pulse group in a counter (34, 59) in a sense that depends on the direction of adjustment and in step with the clock (1) is derived from the phase displacement of said phase-displaced signal, characterized in that the illumination (12 to 15) of the optoelectronic receivers (16 to 19) is modulated in phase at the carrier frequency, so that amplitude-modulated signals for further processing appear at the outputs of the receivers (16 to 19) one of the modulated output signals is displaced in phase by 90° before it is combined with the other signal, a carrier frequency binary signal is derived from a binary output signal of the clock, an alternating supply voltage for the illuminating means (12 to 15) is derived from said carrier frequency signal, said binary carrier frequency signal is used to determine for the phase-displaced signal a phase displacement which corresponds to the instantaneously scanned fractional part of an increment of the scale member (72), and said phase-displaced signal is reconverted to a binary control signal.

2. A method according to claim 1, characterized in that count signals which are associated with the full scale increments and/or direction-indicating signals are additionally derived from the modulated signals.

3. A method according to claim 2, characterized in that count signals corresponding to the full scale increments which have been scanned are counted in a separate counter (36, 65) and the contents of said counter (36, 65) and of the counter (34, 59) for receiving the pulses of the pulse groups are combined to form the result of the measurement in a computer (37, 68) for controlling a display or evaluating unit (38, 69).

4. A measuring apparatus for carrying out the method according to any of claims 1 to 3 comprising an incremental scale member (71, 72) and a scanning unit (73), which is adjustable relative to said scale member and comprises illuminating means (12 to 15) for illuminating optoelectronic receivers (16 to 19) through the scale (71) and through scanning gratings which are offset relative to each other by fractional parts of a scale increment, also comprising modulating stages for an amplitude modulation of an alternating carrier voltage which is generated by a clock (1) and a succeeding frequency divider stage (5) and which is thus modulated in dependence on relatively phase-displaced variations of the intensity of illumination of the optoelectronic receivers (16 to 19) during an adjustment of the incremental scale member (72) and the scanning unit (73) relative to each other, which variations follow a sine function, transforming or analog adder stages, which succeed the receivers (16 to 19) in two signal channels, and an output stage (27, 28, 54), in which the two modulated signals transmitted in the signal channels are combined, one of which modulated signals includes a carrier signal that has been rotated in phase through 90° whereby a signal is generated which includes a carrier signal that is displaced in phase relative to the alternating output carrier voltage in proportion to that fractional part of a scale increment which is just being scanned, a phase detector (3, 57) for generating a control signal and a counter (34, 59) for counting pulse groups in step with the clock and in a sense which depends on the direction of adjustment, which pulse groups have a magnitude that depends on the control signal, characterized in that the illuminating means (12 to 15) together with the scale member (71, 72), scanning gratings and optoelectronic receivers (16 to 19) constitute the modulating stages and are connected to a source of a single, common alternating carrier voltage, so that the intensity of illumination varies simultaneously, and one of the signal channels (21, 22, 23, 24, 27 and/or 45) includes a phase-rotating element (26, 53) for rotating the carrier signal in phase through 90°.

5. A measuring apparatus according to claim 4, characterized in that that part of the circuit which includes the phase detector is capacitively (20, 49, 50) coupled to the lines (45, 46) for conducting the output signals.

6. A measuring apparatus according to claims 4 and 5, characterized in that the counter (34) is connected to the clock (1) by a gating circuit (3, 8) which is controlled by a binary signal that has been obtained from the frequency divider stage and in another channel (7, 10, 11) has been transformed to the alternating carrier voltage, on the one hand, and by the phase-displaced carrier signal that has been reconverted to a binary signal, on the other hand, so that the time for which the gating circuit is conductive and, as a result, the number of clock signals transmitted to the counter (34) are proportional to the phase displacement.

7. A measuring apparatus according to claim 4 or 5, characterized in that the counter (59) is connected to the clock (1) and comprises a start input (60) and a stop input (58), the start input (60) is fed by the output of the frequency divider stage (5) and the stop input is fed by the output of the phase detector (57).

8. A measuring apparatus according to any of claims 4 to 7, characterized in that an element (8, 65) which is responsive to the waveform of the amplitude modulation is provided to determine the counting sense.

9. A measuring apparatus according to any of claims 4 to 8, characterized in that a further counter (36, 65) is provided, which in a sense depending on the direction of adjustment counts count signals derived from the waveform of the amplitude modulation, and the two counters (34, 36) and (59, 65) are succeeded by a computer (37, 68), which serves to determine the result of the measurement and is connected to the display or evaluating unit (38, 69).

10. A measuring apparatus according to any of claims 4 to 9 characterized in that high-frequency filters, low-pass filters (61, 62) or latch-and-hold means for generating signals depending on the waveform of the amplitude modulation are additionally connected to the outputs of the receiver circuitry which includes the optoelectronic receivers (16 to 19).

11. A measuring apparatus according to any of claims 4 to 10, characterized in that a direction discriminator circuit (8) is provided that is controlled by the signals corresponding to the waveform of the amplitude modulation and serves to determine the counting senses of the two counters (34, 36) in dependence on the direction of adjustment of the scanning unit (73).

12. A measuring apparatus according to any of claims 4 to 11, characterized in that the scanning unit comprises four optoelectronic receivers (16 to 19), which are associated with scanning gratings, which are offset by one fourth of an increment of the incremental scale (71), so that the amplitude modulations of the signals generated by said receivers are displaced in phase by 90° from each other, each pair of signals which are modulated with a phase displacement of 180° relative to each other are combined in an analog adder (24, 25, 43, 44) to form a sum signal, one of the sum signals is transmitted through the 90°-phase-rotating element, the sum signals are delivered to an output analog adder stage (27, 29 to 44), the output signal of which is converted by a converter (comparator 31, 57) to a digital signal, and the difference in time between said digital signal and the triggering digital output signal of the frequency divider stage (5) succeeding the clock (1) corresponds to the phase displacement of the carrier signal.

13. A measuring apparatus according to claim 12, characterized in that the modulated signals (from 16 and 17 and 16, 17 and 18, 19, respectively), which are modulated with a phase displacement of 180°, are combined in respective analog adders (24, 25) with inversion of one signal.

14. A measuring apparatus according to claim 12, characterized in that the digital output signal from the comparator (57), which signal corresponds to the phase displacement, is fed to the stop input of a counter, that is connected to the clock (1) and is started by the output of the frequency divider stage (5).

**Revendications**

1. Procédé de mesure de longueurs et d'angles par voie opto-électronique, dans lequel une unité d'exploration (73), présentant des grilles de lecture décalées, éclaire des récepteurs opto-électroniques (16 à 19) dans des positions décalées par rapport à une échelle graduée incrémentale (71, 72) et à travers les grilles et l'échelle graduée (72), produit alors des variations de l'intensité d'éclairage qui suivent une fonction sinusoïdale associée au pas (71) de l'échelle graduée et qui sont déphasées pour les différents récepteurs (16 à 19) et ces variations sont utilisées pour former des tensions alternatives porteuses, dérivées du signal de sortie d'un générateur de rythme (1) et modulées de façon correspondante, et à partir desquelles on forme, par réunion, un signal déphasé, par rapport au signal de base tiré du générateur de rythme, proportionnellement à la fraction du pas qui vient d'être explorée, et à partir du déphasage de ce signal, on forme un signal de commande servant à introduire un groupe d'impulsions proportionnel dans un compteur (43, 59), selon le sens du déplacement, au rythme du générateur de rythme (1), caractérisé par le fait que l'éclairage (12 à 15) des récepteurs opto-électroniques (16 à 19) est modulé dans la fréquence porteuse en concordance de phase, de sorte que, aux sorties des récepteurs (16 à 19), apparaissent les signaux modulés en amplitude qui sont envoyés au traitement suivant, l'un des signaux de sortie modulés étant déphasé à 90° avant d'être réuni à l'autre signal et il se produit, à partir d'un signal de sortie binaire du générateur de rythme, un signal binaire présentant la fréquence porteuse et d'où l'on dérive une tension alternative d'alimentation pour le dispositif d'éclairage (12 à 15) et d'après laquelle on détermine le déphasage, correspondant à la fraction de pas de l'échelle graduée (72) qui est explorée au moment considéré du signal déphasé, lequel est retransformé en un signal de commande binaire.

2. Procédé selon la revendication 1, caractérisé par le fait qu'en supplément, on produit à partir des signaux modulés, des signaux d'identification du comptage et du sens associés aux incréments entiers de l'échelle graduée.

3. Procédé selon la revendication 2, caractérisé par le fait que les signaux de comptage correspondants aux increments entiers explorés de l'échelle graduée sont décomptés dans un compteur (36, 65) qui leur est propre et que les contenus de ce compteur (36, 65) et du compteur (34, 59), qui reçoit les impulsions des groupes d'impulsions, sont combinés dans un calculateur (37, 68) commandant une unité d'affichage ou d'analyse (38, 69), pour former le résultat de la mesure.

4. Dispositif de mesure pour la mise en œuvre du procédé selon l'une des revendications 1 à 3, comprenant une échelle graduée incrémentale (71, 72) et une unité d'exploration (73) pouvant se déplacer par rapport à cette échelle et munie de dispositifs d'éclairage (12 à 15) qui éclairent des récepteurs opto-électroniques (16 à 19) à travers l'échelle graduée (71) et de grilles du pas, des étages de modulation servant à moduler en amplitude une tension alternative porteuse produite par un générateur de rythme (1) suivi d'un étage diviseur (5) en fonction des variations déphasées les unes par rapport aux autres de l'intensité de l'éclairage des récepteurs opto-électroniques (16 à 19), qui suivent une fonction sinusoïdale, lors du déplacement relatif entre l'échelle graduée incrémentale (72) et l'unité d'exploration (73), des étages de transformation ou de sommation placés en aval des récepteurs (16 à 19) dans deux branches de transmission de signaux, et un étage final (27, 28, 54) dans lequel se réunissent les deux signaux modulés circulant dans les branches de transmission des signaux, dans lesquels l'un des signaux porteurs présente un déphasage de 90°, de sorte qu'on obtient un signal déphasé dans le signal porteur par rapport à la tension alternative de la porteuse de sortie, proportionnellement à la fraction de pas qui vient d'être explorée, un détecteur de phase (3, 57) destiné à produire un signal de commande, et un compteur (34, 59) dans lequel peuvent être introduits, au rythme du générateur de rythme et d'une façon qui dépend du sens du déplacement, des groupes d'impulsions déterminés en grandeur par des signaux de commande et qui correspondent à la fraction du pas, caractérisé par le fait que les dispositifs d'éclairage (12 à 15), qui forment eux-mêmes les étages de modulation en combinaison avec l'échelle graduée (71, 72), les grilles d'exploration et les récepteurs opto-électroniques (16 à 19), sont raccordés à une seule et même tension alternative porteuse commune, de sorte que l'intensité de l'éclairage varie en concordance de phase et par le fait que, dans l'une des branches de transmission des signaux (21, 23, 24, 27 ou 45), est intercalé un organe de déphasage (26, 53) qui provoque la rotation de phase de 90° du signal porteur.

5. Dispositif de mesure selon la revendication 4, caractérisé par le fait que la partie du circuit qui contient le détecteur de phase est couplée par voie capacitive (20, 49, 50) aux conducteurs (45, 46) transmettant les signaux de sortie.

6. Dispositif de mesure selon les revendications 4 et 5, caractérisé par le fait que le compteur (34) est connecté au générateur de rythme par l'intermédiaire d'un circuit porte (3, 8) qui est piloté, d'une part, par un signal binaire issu de l'étage diviseur transformé en la tension alternative porteuse dans une autre branche (7, 10, 11) et, d'autre part, par un signal porteur déphasé, retransformé en un signal binaire, de sorte que le temps d'ouverture de la porte et, par conséquent, le nombre des signaux de rythme qui sont transmis au compteur (34) est proportionnel au déphasage.

7. Dispositif de mesure selon l'une des revendications 4 ou 5, caractérisé par le fait que le compteur (59) est connecté au générateur de rythme (1) et présente une entrée de mise en marche et une entrée d'arrêt (60, 58), l'entrée de mise en marche (60) étant attaquée par la sortie de l'étage diviseur (5) et l'entrée d'arrêt étant attaquée par la sortie du détecteur de phase (57).

8. Dispositif de mesure selon l'une des revendications 4 à 7, caractérisé par le fait que, pour la détermination du sens de comptage, il est prévu un organe (8, 65) sensible au profil de la modulation d'amplitude.

9. Dispositif de mesure selon l'une des revendications 4 à 8, caractérisé par le fait qu'il est prévu un autre compteur (36, 65) qui compte, en fonction du sens du déplacement, des signaux de comptage issus du profil de la modulation d'amplitude et par le fait qu'en aval des deux compteurs (34, 36 ou 59, 65 respectivement), est agencé un calculateur (37, 68) destiné à déterminer le résultat de la mesure et qui est connecté à l'unité d'affichage ou d'analyse (38, 69).

10. Dispositif de mesure selon l'une des revendications 4 a 9, caractérise par le fait que, pour produire des signaux qui correspondent au profil de la modulation d'amplitude, il est prévu, connectés en supplément aux sorties du circuit récepteur, qui comprend les récepteurs opto-électroniques (16 à 19), des filtres à haute-fréquence, des filtres passe-bas (61, 62) ou des dispositifs de verrouillage et de maintien.

11. Dispositif de mesure selon l'une des revendications 4 à 10, caractérisé par le fait qu'il est prévu un circuit discriminateur de sens (8), commandé par les signaux correspondants au profil de la modulation d'amplitude et qui détermine les sens de comptage des deux compteurs (34, 36) en fonction du sens de déplacement de l'unité d'exploration (73).

12. Dispositif de mesure selon l'une des revendications 4 à 11, caractérisé par le fait que l'unité d'exploration comprend quatre récepteurs opto-électroniques (16 à 19) qui sont associés aux grilles d'exploration, lesquelles sont décalées chacune d'un quart de pas de l'échelle graduée incrémentale (71), de sorte que les modulations d'amplitude des signaux qui apparaissent sur ces récepteurs sont déphasés chacun de 90°, en ce que les signaux modulés, déphasés de 180° l'un par rapport à l'autre, sont réunis par paires dans un formateur de somme (24, 25, 43, 44) pour former un signal somme, par le fait qu'un des signaux sommes est transmis à travers l'organe de rotation de phase de 90° et que les signaux sommes sont envoyés à un étage de sortie-sommation (27, 29 à 44), dont le signal de sortie est transformé par l'intermédiaire d'un convertisseur (comparateur 31, 57), en un signal numérique dont le décalage temporel, par rapport au signal de sortie numérique déclencheur de l'étage diviseur (5) placé en aval du générateur de rythme (1), correspond au déphasage représenté par le signal porteur.

13. Dispositif de mesure selon la revendication 12, caractérisé par le fait que les deux signaux modulés déphasés de 180° (issus de 16 et 17 ou de 18 et 19) de chaque paire sont réunis dans un formateur de somme (24, 25) avec inversion de l'un des signaux.

14. Dispositif de mesure selon la revendication 12, caractérisé par le fait que le signal de sortie numérique du comparateur (57), qui correspond au déphasage, apparaît à l'entrée d'arrêt d'un compteur qui est mis en marche par la sortie de l'étage diviseur (5) et qui est raccordé au générateur de rythme (1).

FIG.1

FIG.2

# FIG.3